# EUROPÄISCHE PATENTSCHRIFT

(11) **EP 1 074 779 B1**
(45) Veröffentlichungstag und Bekanntmachung des Hinweises auf die Patenterteilung: **21.09.2005**
(21) Anmeldenummer: 00115975.5
(22) Anmeldetag: 26.07.2000
(51) Int. Cl.: F16L 23/02, F16L 21/025

(54) **Flanschverbindung von Rohren, insbesondere Luftleitungsrohren**
Flange coupling for pipes, particularly for air conveying pipes
Raccord à brides pour tuyaux, en particulier pour les conduits de transport d'air

(30) Priorität: 05.08.1999 DE 19936976
(43) Veröffentlichungstag der Anmeldung: 07.02.2001
(73) Patentinhaber: Siegwart, Emil, 66280 Sulzbach-Neuweiler (DE)
(72) Erfinder: Siegwart, Emil, 66280 Sulzbach-Neuweiler (DE)
(74) Vertreter: Bernhardt, Winfrid

(56) Entgegenhaltungen:
- EP-A- 0 537 594
- EP-A- 0 596 230
- DE-U- 9 403 326
- FR-A- 1 049 913
- US-A- 3 199 901
- US-A- 4 995 648
- US-A- 5 473 815

## Beschreibung

Die Erfindung betrifft eine Flanschverbindung von Rohren, insbesondere Luftleitungsrohren, bei der ein an seinem einen Ende mit einem Flansch für eine lösbare Flanschverbindung versehenes Rohrstück an seinem anderen Ende als ein Steckverbindungselement ausgebildet ist.

Eine solche Flanschverbindung ist aus der DE 94 03 326 U bekannt. Die Schrift schlägt Abstandhalter vor, die einen festen Abstand zwischen den betreffenden beiden Flanschen einrichten, um einen zwischengelegten Dichtring nicht zu stark zu pressen. Der eine Flansch soll außerdem einen zylindrischen Ansatz aufweisen, in dem der andere Flansch geführt ist.

Aus der US 5,473,815 A ist eine gleiche, allerdings nicht lösbare Flanschverbindung zur Herstellung eines Rohrkrümmers bekannt.

Nach der vorliegenden Erfindung stehen die Flanschverbindung und die Steckverbindung in anderem Zusammenhang:

Rohrleitungssysteme für Luft setzen sich meist vielgestaltig zusammen aus Leitungsrohren individueller, durch die baulichen Verhältnisse bestimmter Längen, häufig aus Wickelfalzrohr, und industriell vorgefertigten Teilen, wie Abzweigen, Krümmern, Übergangsstücken zwischen Rohren verschiedenen Durchmessers und funktionellen Bauelementen, wie Absperrklappen, Drosselklappen oder Volumenstromreglern.
Die geforderte Dichtheit der betreffenden Verbindungen verlangt maßgenau in hoher Qualität hergestellte Rohre und Teile. Gleichwohl nimmt der Montageaufwand einen hohen Anteil der Herstellungskosten in Anspruch.

Um die Montagearbeit zu verringern, sind, z.B. aus der EP 0 596 230 B 1 bekannte, einfach zu betätigende Steckverbindungen geschaffen worden: Ein in ein Rohrende einzuschiebendes Rohrstück ist mit einem Dichtring aus einem Schaumstoff von z.B. 10 bis 20 Shore Härte versehen, der bei dem Einschieben von einem Montagesitz in einen Dichtsitz rollt und dabei zusammengedrückt wird und dichtet.

Die Steckverbindung bedeutet jedoch einen hohen Arbeitsaufwand bei nachträglichen Montagen, da sie axiale Verlagerung der Rohre und Teile bedingt.
Das Ausbauen und Einsetzen einzelner Teile ist einfacher mit Flanschverbindungen, die nach Lösen der Befestigungsmittel ein einfaches Herausnehmen des Teiles in Querrichtung der Rohrleitung erlauben. Hier besteht jedoch das Problem bei der Erstmontage, die Rohrenden, insbesondere der individuell verlegten Rohre, mit Flanschen zu versehen. Vorgefertigte Endstücke mit Flansch zum klemmenden Einsatz in den Rohrenden sind bekannt, konnten sich aber nicht einführen.

Der Erfindung liegt die Aufgabe zugrunde, eine insgesamt montagefreundliche Verbindung zu schaffen.

Die Erfindung geht zu diesem Zweck aus von der Flanschverbindung und sieht vor, dass der Flansch sich vom Außenrand aus nach innen bis zu einem Absatz verbreitert und mit seinem ebenso gestalteten Gegen-Flansch durch eine einen angepassten Querschnitt aufweisende Spannschelle oder durch Klammern verbunden ist, die mit ihren Enden hakenartig unter die beiden Absätze greifen, und das Steckverbindungselement mit einem beim Einschieben in ein Rohrende von einem Montagesitz in einen Dichtsitz rollenden Dichtring versehen ist.

Damit wird die Verbindung doppelt ausgeführt, als Flanschverbindung sowie als Steckverbindung. Die Erstmontage ist damit wesentlich einfacher als bei den bisherigen reinen Flanschverbindungen. Spätere Montagen sind in der erwähnten einfachen Weise möglich, die die Flanschverbindung erlaubt. Das ist insbesondere von Vorteil zum Ein- und Ausbau der funktionellen Bauelemente für die inzwischen vorgeschriebenen Säuberungen der Leitungssysteme in bestimmten Zeitabständen mittels durch die Leitungen fortbewegter Reinigungsroboter.

Weiter ist im Sinne der Montagevereinfachung und Sicherstellung einer dichten Verbindung vorgesehen, dass die Klammern an ihrem einen, ösenförmigen, Ende eine seitliche Fortsetzung als Hebelgriff aufweisen und die Flansche an ihrer stirnseitigen Berührungsfläche jeweils eine umlaufende Rille aufweisen und in den beiden einander zugekehrten Rillen ein Dichtring angeordnet ist, der an dem einen Flansch befestigt ist oder aus zwei an den beiden Flanschen befestigten Hälften, die jedoch leicht über die Berührungsfläche vorgewölbt sind, zusammengesetzt ist.

Um die Erfindung auch bei größeren Rohrdurchmessern anwenden zu können, insbesondere oberhalb 300 mm und bis zu 1000 mm oder mehr, ist gemäß weiterer Erfindung vorgesehen, daß er erstgenannte Dichtring aus einem Schlauch besteht, dessen Material eine Härte von über 30 Shore aufweist.
Diese Maßnahme wird wie folgt erklärt:

Die Dichtringe der Steckverbindungen haben neben der Dichtfunktion insofern auch axiale Verbindungsfunktion, als sie die zusammengesteckten Rohre und Rohrteile in Axialrichtung zusammenhalten gegen die aus dem Druck des Mediums resultierende Axialkraft. Die durch die Anpressung des Dichtrings und seine Reibungsschlüssigkeit an der Rohrwandung erzeugte Haltekraft und die Widerstandskraft des Dichtringes in sich gegen Zurückrollen sind proportional zur Länge des Dichtrings und steigen damit linear mit dem Durchmesser, während die aus dem Druck des Mediums resultierende Axialkraft im Quadrat ansteigt. Die maximal mögliche Anpressung und Steifigkeit des Dichtrings und damit Widerstandskraft gegen (Zurück-) Rollen, bezogen auf die Längeneinheit, reichen schließlich nicht mehr aus, um die erforderliche Rückhaltekraft zu erzeugen. Sie werden begrenzt durch die für das Einschieben des Steckverbindungselementes in das Rohrende zur Ausführung der Walkarbeit bei dem Rollen des Dichtrings auszuübende Kraft, die ohnehin auch bei gleichbleibender Anpressung und Steifigkeit linear mit dem Durchmesser ansteigt. Der in der Mitte einen Hohlraum aufweisende Schlauch rollt im Vergleich zu dem bisher für den Dichtring verwendeten Mossgummi oder ähnlichen geschlossenzelligen, im übrigen aber den Querschnitt des Dichtrings ganz ausfüllenden Schaumstoff bei gleicher Anpressung an die Rohrwand leichter ab. Nach Einrasten in dem Dichsitz sperrt er sich jedoch stärker gegen eine Rückbewegung als der Schaumstoff. Die, für sich aus einem steiferen Material bestehende, Schlauchwandung bildet zwischen ihrer Abstützung an der Rohrwand durch Reibung und einer direkten Abstützung gegen die eine Seitenwand des als eine Rille ausgebildeten Dichtsitzes ein, schräg und mit einer wesentlichen Komponente in Axialrichtung mechanisch wirkendes, steiferes Stützelement als es der betreffende Querschnittsabschnitt des Schaumstoffes vermag. Dabei ist das Vollmaterial der Schlauchwandung auch zuverlässiger als der mehr oder weniger inhomogene Schaumstoff.

Geeignete Parameter-Kombinationen zur Erzielung der vorstehenden Wirkungen lassen sich routinemäßig finden.
Das Material des Schlauches wird zweckmäßigerweise eine Härte von 40 bis 70, vorzugsweise 50 bis 60, Shore aufweisen.
Die Wanddicke des Schlauches dürfte in der Regel mit 20 bis 25% des Schlauchdurchmessers geeignet bemessen sein.
Der Dichtsitz ist vorzugsweise durch eine in dem Rohrstück ausgebildete Rille mit vorzugsweise flachem Boden und mit einer beim Einschieben in das Rohrende von dem Dichtring überrollten Seitenwand gebildet, deren Höhe 25 bis 30% der Höhe des zusammengedrückten Dichtrings beträgt.
Die andere Seitenwand der Rille, die vorzugsweise zusammen mit der ersteren den Dichtring unter Berührung einfaßt, ist höher als die erste, bevorzugt etwa doppelt so hoch.

Zweckmäßigerweise ist der Dichtring an dem Dichtsitz auf eine Höhe von 55 bis 70%, vorzugsweise 60 bis 65%, seines ursprünglichen Durchmessers zusammengedrückt.

Die erwähnte Einfassung des Dichtringes durch in Berührung mit ihm befindliche Seitenwände trägt wesentlich zu der Stabilisierung des Dichtrings in seiner zusammengedrückten Form auf dem Dichtsitz bei.

Der Montagesitz des Dichtringes ist vorzugsweise durch eine Rille mit eingewölbtem Boden gebildet, von der aus sich der Durchmesser des Rohrstücks zu dem Rand der ersteren Seitenwand der den Dichtsitz bildenden Rille vergrößert. Deren Boden liegt auf einem größeren Durchmesser des Rohrstücks als der Boden der anderen Rille.

Die Zeichnungen geben ein Ausführungsbeispiel der Erfindung mit Abwandlungen wieder.
- Fig. 1: zeigt einen Ausschnitt aus einer Rohrleitung in axialem Schnitt,
- Fig. 2: zeigt eine Einzelheit in größerem Maßstab,
- Fig. 3: zeigt eine Einzelheit mit einer Abwandlung,
- Fig. 4: zeigt eine weitere Abwandlung und
- Fig. 5 und 6: verdeutlichen einen Montagevorgang, Fig. 6 wiederum mit einer Abwandlung einer baulichen Einzelheit.

Zwischen zwei Rohrenden 1 und 2 ist ein rohrförmiges Gehäuse 3 einer Drosselklappe 4 mit Flanschverbindungen 5 eingesetzt.

Die Gehäuse-Enden des Gehäuses 3 sind herstellungsseitig mit Flanschen 6 versehen, und zwar in der Art, daß ein an den Flansch 6 angeformter Rohrstutzen 7 in die Gehäuse-Enden des Gehäuses 3 eingesetzt und dort mit dem Gehäuse 3 fest verbunden worden ist, z.B. durch Verschweißen, Verfalzung usw..

Die Gegenstücke zu den Flanschen 6 sind Flansche 8, die jeweils eine Baueinheit mit einem Steckverbindungselement 9 bilden, mittels dessen sie an dem Rohrende 1 bzw. 2 angebracht sind.

Die Flansche 6 und 8 sind jeweils in der Weise aus Blech geformt, daß sie an ihrem Außenrand von ihrer stirnseitigen Berührungsfläche zurückgebogen und unter Bildung einer Schrägfläche 10 abgewinkelt sind, die mit einem Absatz 11 endet. Die beiden Schrägflächen 10 und Absätze 11 an den aneinanderliegenden Flanschen erlauben, die beiden Flansche auf verschiedene Weise zu verbinden.

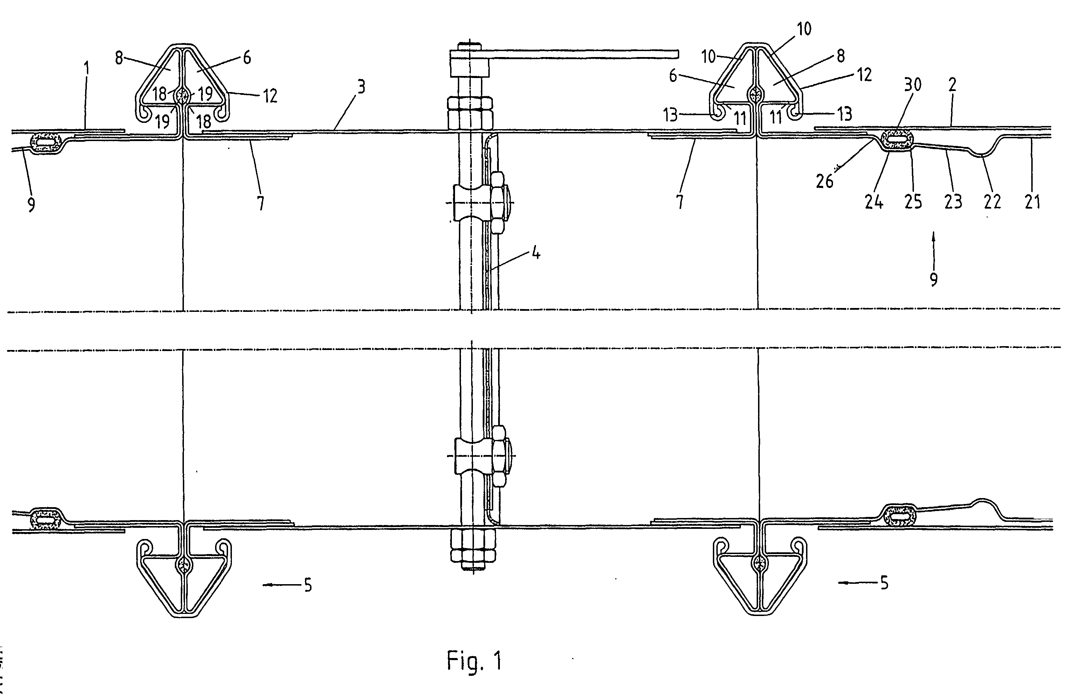

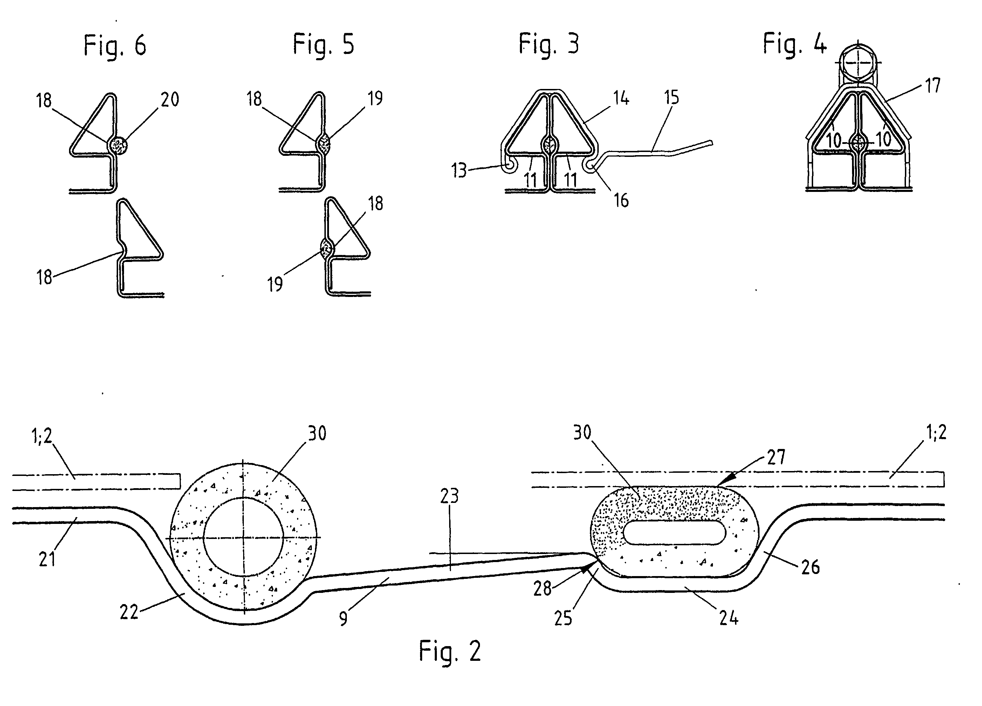

Nach Fig. 1 sind, über den Umfang verteilte, Klammern 12 um die Flansche 6 und 8 gelegt. Sie sind an den Enden jeweils etwa auf einem Dreiviertelkreis zu Ösen 13 gebogen, die hakenartig unter den Absätzen 11 einrasten.
Nach Fig. 3 können Klammern 14 angebracht und entfernt werden mittels eines Hebelgriffes 15. Der Hebelgriff 15 ist an der einen, anders als die Ösen 13 geformten, Öse 16 der Klammer als Fortsetzung angeformt. Die Ausbildung ist derart, daß der Hebelgriff beim Öffnen nicht nur an der Klammer zieht, sondern auch die Öse leicht im Öffnungssinne der Verhakung verformt. Der Hebelgriff 15 kann jedoch auch zum Anbringen der Klammer verwendet werden.
Nach Fig. 4 werden die Schrägflächen 10 der Flansche 8 und 10 für die Verbindung benutzt, indem eine als Gegenstück dazu geformte Spannschelle 17 darüber gelegt und geschlossen wird.

In der die Anlagefläche bildenden Lage der Flansche 6 und 8 ist eine Rille 18 zur Aufnahme eines Dichtringes geformt. Nach Fig. 1 und 5 ist der Dichtring aus zwei in die Rillen eingeklebten linsenförmigen Teilen 19 zusammengesetzt. Nach Fig. 6 ist nur in die eine Rille 18 ein Dichtring 20 eingeklebt.

Die mit den Flanschen 8 kombinierten Steckverbindungselemente 9 sind jeweils wie folgt profiliert:

An einen zylindrischen Endabschnitt 21 schließt sich eine Einziehung mit einer Rille 22 als Montagesitz für einen Dichtring 30 in Form eines dickwandigen Gummischlauches an. Darauf folgt ein sich konisch erweiternder Abschnitt 23. Am Ende ist eine Rille 24 mit einem flachen Boden und zwei Seitenwänden 25 und 26 als Dichtsitz für den Dichtring 30 geformt.

Beim Einschieben des Steckverbindungselements 9 in das Rohrende 1 bzw. 2 stößt die Endkante des Rohres, wie in Fig. 2 links veranschaulicht, an den noch unverformt in der Rille 22 sitzenden Dichtring 30. Das Rohrende 1 bzw. 2 rollt den Dichtring, wobei es ihn zusammendrückt, aus der Rille 22 heraus und über den Abschnitt 23 hinweg bis in die Rille 24. Dabei schiebt sich das Rohrende 1 bzw. 2 über den Dichtring 30 hinweg (als Relativbewegung betrachtet). Rastet der Dichtring 30 in der Rille 24 ein, deren beide Seitenwände 25 und 26 ihn halten, so ist die Endstellung der Einschubbewegung erreicht. Das Steckverbindungselement 9 und das Rohrende können sich nicht weiter gegeneinander verschieben, weil der Dichtring 30 über die hohe Seitenwand 26 der Rille 24 nicht hinausrollen kann und die Reibungskraft des zusammengedrückten Dichtrings an der Rohrwand wegen des hohen Reibungskoeffizienten der Paarung Gummi/Metall ein Rutschen ausschließt.

Einer Rückbewegung, bei der der Dichtring 30 unter weiterer starker Zusammendrückung über die Seitenwand 25 der Rille 24 als Schwelle hinweggehen muß, steht eine außerordentlich hohe Haltekraft des Dichtrings 30 entgegen.
Der Kräftefluß liegt im ganzen etwa zwischen den Pfeilen 27 und 28 in Fig. 2. Die von der Rohrwand her durch die Reibung eingebrachte Kraft wird an der Seitenwand 25 der Rille 24 abgestützt. Dazwischen liegt hauptsächlich die verhältnismäßig dicke Schlauchwand und wenig Schlauchhohlraum. Die Schlauchwand aus Vollmaterial bildet eine wesentlich stärkere und sicherere Stütze als der der gleiche Querschnittsbereich im Falle eines Dichtrings aus Schaumstoff mit vollem Querschnitt.

## Patentansprüche

1. Flanschverbindung von Rohren, insbesondere Luftleitungsrohren, bei der ein an seinem einen Ende mit einem Flansch (8) für eine lösbare Flanschverbindung versehenes Rohrstück an seinem anderen Ende als ein Steckverbindungselement (9) ausgebildet ist,
**dadurch gekennzeichnet,**
**dass** der Flansch (8) sich vom Außenrand aus nach innen bis zu einem Absatz (11) verbreitert und mit seinem ebenso gestalteten Gegen-Flansch (6) durch eine einen angepassten Querschnitt aufweisende Spannschelle (17) oder durch Klammern (12;14) verbunden ist, die mit ihren Enden (13;16) hakenartig unter die beiden Absätze (11) greifen, und das Steckverbindungselement mit einem beim Einschieben in ein Rohrende (1;2) von einem Montagesitz (22) in einen Dichtsitz (24) rollenden Dichtring (30) versehen ist.

2. Flanschverbindung nach Anspruch 1,
**dadurch gekennzeichnet,**
**dass** die genannten Enden ösenförmig sind und die Klammern (14) an ihrem einen ösenförmigen Ende (16) eine seitliche Fortsetzung als einen Hebelgriff (15) aufweisen.

3. Flanschverbindung nach einem der Ansprüche 1 bis 2,
**dadurch gekennzeichnet,**
**dass** die Flansche (6;8) an ihrer Berührungsfläche jeweils eine umlaufende Rille (18) aufweisen und in den beiden einander zugekehrten Rillen (18) ein Dichtring (20) angeordnet ist, der an dem einen Flansch befestigt ist oder aus zwei den beiden Flanschen befestigten Hälften (19), die jedoch leicht über die Berührungsfläche vorgewölbt sind, zusammengesetzt ist.

4. Flanschverbindung nach einem der Ansprüche 1 bis 3,
**dadurch gekennzeichnet,**
**dass** der erstgenannte Dichtring (30) aus einem Schlauch (30) besteht, dessen Material eine Härte von über 30 Shore aufweist.

5. Flanschverbindung nach Anspruch 4,
**dadurch gekennzeichnet,**
**dass** das Material des Schlauches (30), vorzugsweise Vollmaterial, eine Härte von 40 bis 70, vorzugsweise 50 bis 60, Shore aufweist.

6. Flanschverbindung nach Anspruch 4 oder 5,
**dadurch gekennzeichnet,**
**dass** die Wanddicke des Schlauches (30) 20 bis 25% des Schlauchdurchmessers beträgt.

7. Flanschverbindung nach einem der Ansprüche 1 bis 6,
**dadurch gekennzeichnet,**
**dass** der Dichtsitz (24) durch eine in dem Rohrstück ausgebildete Rille (24) mit vorzugsweise flachem Boden und mit einer beim Einschieben in das Rohrende (1;2) von dem Dichtring (30) überrollten Seitenwand (25) gebildet ist, deren Höhe 25 bis 30% der Höhe des zusammengedrückten Dichtrings (30) beträgt.

8. Flanschverbindung nach Anspruch 7,
**dadurch gekennzeichnet,**
**dass** die andere Seitenwand (26) der Rille (24), die vorzugsweise zusammen mit der ersten Seitenwand (25) den Dichtring (30) unter Berührung einfaßt, höher als die erste ist, vorzugsweise etwa doppelt so hoch.

9. Flanschverbindung nach einem der Ansprüche 1 bis 8,
**dadurch gekennzeichnet,**
**dass** der Dichtring (30) an dem Dichtsitz (24) auf eine Höhe von 55 bis 70%, vorzugsweise 60 bis 65%, seines ursprünglichen Durchmessers zusammengedrückt ist.

10. Flanschverbindung nach einem der Ansprüche 1 bis 9,
**dadurch gekennzeichnet,**
**dass** der Montagesitz (22) durch eine Rille (22) mit eingewölbtem Boden gebildet ist, von der aus sich der Durchmesser des Rohrstücks (9) zu dem Rand der ersteren Seitenwand (25) der den Dichtsitz (24) bildenden Rille (24) vergrößert, deren Boden auf einem größeren Durchmesser des Rohrstücks (9) liegt als der Boden der anderen Rille (22).

## Claims

1. Flange coupling for pipes, particularly for air conveying pipes, in which a pipe section provided at its one end with a flange (8) for a releasable flange coupling is designed at its other end as a push-in connecting element (9), **characterized in that** the flange (8) widens inwards from the outer margin up to a step (11) and is connected to its mating flange (6), designed in the same way, by a clamp (17) having an adapted cross section or by clips (12; 14), the ends (13; 16) of which engage under the two steps (11) in a hook-like manner, and the push-in connecting element is provided with a sealing ring (30) which rolls from an assembly seat (22) into a sealing seat (24) when being pushed into a pipe end (1; 2).

2. Flange coupling according to Claim 1, **characterized in that** the said ends are lug-shaped, and the clips (14), at their one lug-shaped end (16), have a lateral extension as a lever grip (15).

3. Flange coupling according to either of Claims 1 and 2, **characterized in that** the flanges (6; 8) each have an encircling groove (18) at their contact surface, and a sealing ring (20) is arranged in the two grooves (18) facing one another, which sealing ring (20) is fastened to the one flange or is composed of two halves (19) which are fastened to the two flanges but are arched so as to protrude slightly beyond the contact surface.

4. Flange coupling according to one of Claims 1 to 3, **characterized in that** the first-mentioned sealing ring (30) consists of a tube (30), the material of which has a Shore hardness of over 30.

5. Flange coupling according to Claim 4, **characterized in that** the material of the tube (30), preferably solid material, has a Shore hardness of 40 to 70, preferably 50 to 60.

6. Flange coupling according to Claim 4 or 5, **characterized in that** the wall thickness of the tube (30) is 20 to 25% of the tube diameter.

7. Flange coupling according to one of Claims 1 to 6, **characterized in that** the sealing seat (24) is formed by a groove (24) formed in the pipe section and having preferably a flat base and a side wall (25) over which the sealing ring (30) rolls when being pushed into the pipe end (1; 2) and whose height is 25 to 30% of the height of the compressed sealing ring (30).

8. Flange coupling according to Claim 7, **characterized in that** the other side wall (26) of the groove (24), which preferably together with the first side wall (25) encloses the sealing ring (30) under contact, is higher than the first, preferably approximately twice as high.

9. Flange coupling according to one of Claims 1 to 8, **characterized in that** the sealing ring (30) is compressed at the sealing seat (24) to a height of 55 to 70%, preferably 60 to 65%, of its original diameter.

10. Flange coupling according to one of Claims 1 to 9, **characterized in that** the assembly seat (22) is formed by a groove (22) having an inwardly arched base, from which groove (22) the diameter of the pipe section (9) increases up to the margin of the first side wall (25) of the groove (24) forming the sealing seat (24), the base of which groove (24) lies on a larger diameter of the pipe section (9) than the base of the other groove (22).

## Revendications

1. Raccord à brides pour des tubes, en particulier pour des conduits de transport d'air, dans lequel un tronçon tubulaire pourvu à l'une de ses extrémités d'une bride (8) destinée à un raccordement à brides détachable est réalisé à son autre extrémité sous la forme d'un élément de raccordement à enfichage (9), **caractérisé en ce que**
la bride (8) s'élargit du bord extérieur vers l'intérieur jusqu'à un talon (11) et est reliée à sa contre-bride (6), configurée de la même manière, par un collier de serrage (17) présentant une section transversale adéquate ou par des pinces (12 ; 14) qui s'engagent par leurs extrémités (13 ; 16) à la manière de crochets au-dessous les deux talons (11), et l'élément de raccordement à enfichage est pourvu d'un anneau d'étanchéité (30) qui, lors de l'introduction dans une extrémité de tube (1 ; 2), roule depuis un siège de montage (22) jusque dans un siège d'étanchéité (24).

2. Raccord à brides selon la revendication 1, **caractérisé en ce que** lesdites extrémités sont en forme d'oeillet et les pinces (14) présentent à l'une de leurs extrémités (16) en forme d'oeillet un prolongement latéral à titre de poignée à levier (15).

3. Raccord à brides selon l'une des revendications 1 et 2, **caractérisé en ce que** les brides (6 ; 8) présentent chacune sur leur surface de contact une rainure annulaire (18), et **en ce qu'**un anneau d'étanchéité (20) est agencé dans les deux rainures (18) tournées l'une vers l'autre, qui est fixé sur l'une des brides ou qui est composé par deux moitiés (19) fixées sur les deux brides, qui sont cependant légèrement bombées au-delà de la surface de contact.

4. Raccord à brides selon l'une des revendications 1 à 3, **caractérisé en ce que** l'anneau d'étanchéité (30) mentionné en premier lieu est constitué par un tuyau flexible (30) dont le matériau présente une dureté Shore supérieure à 30.

5. Raccord à brides selon la revendication 4, **caractérisé en ce que** le matériau du tuyau flexible (30), de préférence un matériau massif, présente une dureté Shore de 40 à 70, de préférence de 50 à 60.

6. Raccord à brides selon l'une ou l'autre des revendications 4 et 5, **caractérisé en ce que** l'épaisseur de paroi du tuyau flexible (30) est de 20 à 25 % du diamètre du tuyau flexible.

7. Raccord à brides selon l'une des revendications 1 à 6, **caractérisé en ce que** le siège d'étanchéité (24) est formé par une rainure (24) ménagée dans le tronçon tubulaire et présentant de préférence un fond plat et une paroi latérale (25) qui est franchie par l'anneau d'étanchéité (30) roulant lors de l'introduction dans l'extrémité de tube (1 ; 2) et dont la hauteur est de 25 à 30 % de la hauteur de l'anneau d'étanchéité (30) comprimé.

8. Raccord à brides selon la revendication 7, **caractérisé en ce que** l'autre paroi latéral (26) de la rainure (24) qui de préférence entoure en le touchant l'anneau d'étanchéité (30) conjointement avec la première paroi latérale (25), est plus grande que la première, de préférence approximativement deux fois plus grande.

9. Raccord à brides selon l'une des revendications 1 à 8, **caractérisé en ce que** l'anneau d'étanchéité (30) sur le siège d'étanchéité (24) est comprimé à une hauteur de 55 à 70 %, de préférence de 60 à 65 % de son diamètre initial.

10. Raccord à brides selon l'une des revendications 1 à 9, **caractérisé en ce que** le siège de montage (22) est formé par une rainure (22) à fond bombé vers l'intérieur, à partir de laquelle le diamètre du tronçon tubulaire (9) s'agrandit vers le bord de la première paroi latérale (25) de la rainure (24) formant le siège d'étanchéité (24), dont le fond se trouve sur un diamètre plus grand du tronçon tubulaire (9) que le fond de l'autre rainure (22).
